# EUROPÄISCHE PATENTSCHRIFT

(11) **EP 0 922 738 B1**
(45) Veröffentlichungstag und Bekanntmachung des Hinweises auf die Patenterteilung: **10.09.2003**
(21) Anmeldenummer: 98123348.9
(22) Anmeldetag: 08.12.1998
(51) Int. Cl.: C09D 167/08, C09D 5/04

(54) **Thixotrope Alkydharz-Zusammensetzungen**
Thixotropic alkyd resin compositions
Compositions de résine alkyde thixotropes

(30) Priorität: 11.12.1997 AT 208997
(43) Veröffentlichungstag der Anmeldung: 16.06.1999
(73) Patentinhaber: Surface Specialties Austria GmbH, 8402 Werndorf (AT)
(72) Erfinder: Urbano, Edmund, Dr., 8044 Graz (AT)
(74) Vertreter: Zounek, Nikolai, Dipl.-Ing.

(56) Entgegenhaltungen:
- EP-A- 0 702 067
- GB-A- 1 447 400

## Beschreibung

Die Erfindung betrifft thixotrope, oxidativ trocknende Alkydharz-Zusammensetzungen, ein Verfahren zu ihrer Herstellung und ihre Verwendung als Bindemittel in Beschichtungsmitteln verschiedenster Art.

Thixotropie ist vor allem bei solchen Beschichtungsmitteln vorteilhaft, die manuell durch Streichen oder Walzen aufgebracht werden, da so das Abtropfen des Lackes und das Abrinnen an senkrechten Flächen verhindert wird. In lösungsmittelarmen Alkydharz-Lacken, sogenannten High-Solids-Lacken, besitzt das zugrundeliegende Alkydharz eine geringere Eigenviskosität, so daß auch nach Abdunstung des Lösungsmittels das Beschichtungsmittel fließfähig bleibt Wegen der langsameren Trocknung dieser Bindemittel im Vergleich zu konventionellen Alkydharzen ist vor allem hier eine Thixotropierung erforderlich.

Aus den Auslegeschriften DE-B 1 192 768 und DE-B 1 198 556 ist bekannt, Alkydharzen entweder durch Zusatz von Dimerfettsäurepolyamiden oder durch Reaktion mit diesen bei erhöhter Temperatur thixotrope Eigenschaften zu verleihen. Solcherart erhaltene thixotrope Alkydharze sind aber auf Zusätze polarer Lösungsmittel empfindlich, wie sie z. B. in Abtönpasten enthalten sind. Sie verlieren auch bei Temperaturen über 35 °C ihre thixotrope Struktur, so daß eine Anwendung bei höheren Temperaturen nicht möglich ist Durch zusätzliche Urethanmodifikation, wie sie in der EP-A 0 035 666 beschrieben ist, wird zwar eine beschränkt wärmestabile Thixotropie erreicht, doch werden kaum optisch klare Produkte erhalten, insbesondere, wenn man zur Einstellung des gewünschten Thixotropiegrades mit nicht thixotropen Bindemitteln mischt.

Klare Bindemittel werden nach EP-A 0 553 663 durch Zumischen eines alkylsubstituierten Polyisocyanats erreicht, welches nach der Reaktion mit einem Diol ein mit dem Alkydharz verträgliches Polyurethan ergibt. Zur Erzielung der gewünschten Tropffreiheit der Lacke muß jedoch bei diesem Verfahren ein hoher Anteil des Thixotropieträgers zu dem Alkydharz zugesetzt werden; dadurch werden aber die Beständigkeit des Lackes und die Eigenschaften des zugrundeliegenden Alkydharzes negativ beeinflußt. Auch ist eine Abmischung mit anderen Harzen wegen der geringen Gelstärke nicht möglich.

Versuche, Alkydharze durch die Modifikation mit Harnstoffgruppen analog dem in DE-A 27 51 761 beschriebenen Verfahren zu thixotropieren, mißlingen, weil die Verträglichkeit des Thixotropiermittels mit Alkydharzen zu schlecht ist und trübe Produkte erhalten werden, die keine glänzenden Lackfilme ergeben.

Nach den Patentanmeldungen DE-A 23 59 923 und EP-A 0 683 214 gelingt die Herstellung klarer Produkte, die über Harnstoffgruppen thixotropiert sind. Dabei wird ein im Alkydharz gelöstes Diamin mit einem Alkylisocyanat oder mit einem Diisocyanat-Monoalkohol-Addukt umgesetzt, wobei im Falle langkettiger Reste eine bessere Verträglichkeit mit dem Harz erreicht wird. Der nach diesem Verfahren im Alkydharz gebildete Polyharnstoff ist aber gegenüber einer oxidativen Vernetzung, wie sie bei lufttrocknenden Alkydharzen üblich ist, inert und kann nicht im Alkydharz eingebaut werden, wodurch die Lösungsmittel- und Wetterbeständigkeit des Lackes geschwächt werden.

Es wurde gefunden, daß dieser Mangel durch Einbau von ungesättigten, gegenüber der oxidativen Trocknung von Alkydharzen reaktiven Gruppen in das Thixotropiermittel behoben werden kann. Überraschenderweise ergab sich, daß durch die Einführung einer olefinischen Doppelbindung in das Thixotropiermittel eine zusätzliche Verstärkung der Thixotropie der Alkydharz-Zusammensetzung erzielt wird.

Die erfindungsgemäße Alkydharz-Zusammensetzung unterscheidet sich von den aus DE-A 23 59 923 und EP-A 0 683 214 bekannten insbesondere durch den Einsatz von ungesättigten, während der oxidativen Trocknung von Alkydharzen ebenfalls reaktiven Urethan-Harnstoffen als Thixotropiermittel, die durch Umsetzung eines Diisocyanats mit einer unterstöchiometrischen Menge eines olefinisch ungesättigten Hydroxyesters, gegebenenfalls in Gegenwart eines bevorzugt ungesättigten aliphatischen Monoalkohols mit 3 bis 22 C-Atomen und anschließende Reaktion des noch isocyanatfunktionellen Urethans mit einem (Poly)amin und/oder Ammoniak erhalten werden.

In der erfindungsgemäßen Zusammensetzung ist auch die Verwendung von Ammoniak als harnstoffbildenden Reaktionspartner möglich, wobei Produkte mit einer ausgeprägten Thixotropie erhalten werden.

Die vorliegende Erfindung betrifft daher thixotrope Zusammensetzungen von lufttrocknenden Alkydharzen, enthaltend Massenanteile von
- 75 bis 98 % Alkydharzen oder modifizierten Alkydharzen a mit einem Ölgehalt von 20 bis 90 % und
- 2 bis 25 % eines Thixotropierungsmittels **b,** erhältlich durch die Reaktion eines
- isocyanatfunktionellen Umsetzungsprodukts **b1** eines mehrfunktionellen Isocyanates **b11** mit einem olefinisch ungesättigten Hydroxyester **b12** ausgewählt aus Hydroxyalkylestern von aliphatischen α,β-ungesättigten Carbonsäuren oder α,β-ungesättigten Dicarbonsäuren mit 2 bis 10 Kohlenstoffatomen im Hydroxyalkylrest und Alkoxylierungsprodukten von (Meth)acrylsäure bis zu einem Alkoxylierungsgrad von 10 mol Alkylenoxid pro 1 mol (Meth)acrylsäure, gegebenenfalls in Gegenwart eines bevorzugt ungesättigten Monoalkohols **b13** mit 3 bis 22 C-Atomen, ausgewählt aus aliphatischen linearen, verzweigten oder cyclischen Alkoholen sowie araliphatischen Alkoholen, bei denen die Hydroxylgruppe an ein aliphatisches Kohlenstoffatom gebunden ist,
mit
- einer aminischen Komponente **b2**, ausgewählt aus einem (Poly)amin und Ammoniak,
wobei bei der Herstellung von **b1** das Verhältnis der Zahl der Isocyanatgruppen in der Komponente **b11** zur Zahl der Hydroxylgruppen in der Komponente **b12** (bzw. **b12** und **b13**, wenn diese Komponente ebenfalls eingesetzt wird) 1 : 0,3 bis 1 : 0,8 ist und die verbleibenden Isocyanatgruppen in **b1** vollständig durch die Reaktion mit der aminischen Komponente b2 verbraucht werden, und wobei die Summe der Massenanteile von **a** und **b** stets 100 % ergibt.

Bevorzugt wird eine Alkydharz-Zusammensetzung aus Massenanteilen von 80 bis 97,5 %, besonders bevorzugt von 90 bis 97 % eines Alkydharzes **a** und 2,5 bis 20 bzw. 3 bis 10 % des Thixotropierungsmittels **b**.

Gegenstand der Erfindung ist auch ein Verfahren zur Herstellung der thixotropen Alkydharz-Zusammensetzungen durch Zusatz von einem Massenanteil von 2 bis 25 % eines Thixotropiermittels **b** zu einem Alkydharz a, wobei die Summe der Massenanteile von **a** und **b** 100 % ergibt, und wobei das Thixotropiermittel **b** durch Umsetzung eines isocyanatfunktionellen Umsetzungsproduktes **b1** und einer aminischen Komponente **b2** vorzugsweise in Gegenwart zumindest eines Teils des Alkydharzes **a** erhältlich ist, und bei der Herstellung von **b1** durch Umsetzung von einem mehrfunktionellen Isocyanat **b11** mit einem olefinisch ungesättigten Hydroxyester **b12**, gegebenenfalls in Gegenwart eines bevorzugt ungesättigten aliphatischen Monoalkohols **b13** mit 3 bis 22 C-Atomen, das Verhältnis der Zahl der Isocyanatgruppen in **b11** zur Zahl der Hydroxylgruppen in **b12** (bzw. **b12** und **b13**) 1 : 0,3 bis 1 : 0,8 ist, und wobei die Mengen von **b1** und **b2** so gewählt werden, daß nach Abschluß der Reaktion keine Isocyanatfunktion mehr nachweisbar ist.

Die Umsetzung der isocyanatfunktionellen Komponente **b1** mit der aminischen Komponente **b2** erfolgt vorzugsweise in Gegenwart zumeindest eines Anteiles des Alkydharzes **a,** wobei gemäß dieser Ausführungsform mindestens 25 % (bevorzugt mindestens 50 %, besonders bevorzugt mindestens 80 %) der Masse des Alkydharzes a bereits bei dieser Umsetzung zugegen sind, während die restlichen maximal 75 % (maximal 50 bzw. 20 %) der Masse des Alkydharzes erst nach der Umsetzung von **b1** und **b2** zugesetzt werden.

Gegenstand der Erfindung ist weiter die Verwendung der nach diesem Verfahren erhaltenen, thixotropen Alkydharz-Zusammensetzungen, gegebenenfalls auch in Kombination mit anderen Harzen, vor allem in oxidativ trocknenden oder über einen radikalischen Mechanismus härtenden Beschichtungsmitteln.

Unter Alkydharzen versteht man durch Polykondensation nach bekannten Verfahren hergestellte Polykondensate, wie sie bei D. H. Salomon, "The Chemistry of Organic Filmformers"; S. 75-131, Robert E. Krieger Publishing Co., Inc., 2nd Edition 1982, beschrieben sind.

Oxidativ trocknende Alkydharze zeichnen sich durch einen Gehalt von mehrfach ungesättigten Fettsäuren oder Ölen aus. Nach DIN 53183 können Alkydharze zur Erzielung besonderer anwendungstechnischer Eigenschaften noch zusätzlich mit weiteren Verbindungen oder durch Reaktion mit diesen modifiziert sein, z. B. mit Harzsäuren, Benzoesäure, Styrol, Vinyltoluol, Isocyanaten, Acryl-, Epoxy- oder Silikonverbindungen. Diese Mischungen oder Reaktionsprodukte werden als "modifizierte Alkydharze" bezeichnet. Obgleich heute vielfach bei der Synthese von Alkydharzen direkt von Fettsäuren statt von deren Triglyceriden ausgegangen wird, wird die Angabe des Ölgehalts ("Öllänge") in % beibehalten und der Gehalt an Fettsäuren in den Massenanteil der entsprechenden Triglyceride im Alkydharz umgerechnet als Öllänge angegeben.

Für die erfindungsgemäße Zusammensetzung kommen als Komponente a lösungsmittelfreie oder in Lösungsmitteln, wie z. B. Kohlenwasserstoffen, Alkoholen oder Estern angelöste (modifizierte) beliebige Alkydharze zum Einsatz.

Die Komponente **b1** wird durch Umsetzung eines mehrfunktionellen Isocyanats **b11** mit einem olefinisch ungesättigten Hydroxyester **b12**, gegebenenfalls in Gegenwart eines bevorzugt ungesättigten Monoalkohols **b13** mit 3 bis 22 C-Atomen erhalten, wobei das Verhältnis der Anzahl der Isocyanatgruppen in **b11** zur Anzahl der Hydroxylgruppen in **b12** und **b13** (soweit diese Komponente mitverwendet wird) 1 : 0,3 bis 1 : 0,8 beträgt. Die Hydroxylgruppen-haltigen Komponenten **b12** und **b13** werden also im stöchiometrischen Unterschuß eingesetzt, bezogen auf die Anzahl der Hydroxyl- und Isocyanatgruppen. Die Komponente **b1** weist daher noch (unreagierte) Isocyanatgruppen auf und wird daher als "isocyanat-funktionell" bezeichnet.

Die mehrfunktionellen Isocyanate **b11** sind lineare, verzweigte oder cyclische aliphatische oder aromatische Verbindungen mit zwei oder mehreren Isocyanatgruppen im Molekül. Bevorzugt werden Diisocyanate; es können auch Gemische von Isocyanaten (Mono-, Di-, Tri- und höher funktionelle Isocyanate) eingesetzt werden, wobei die mittlere Isocyanatfunktionalität (mittlere Anzahl der Isocyanatgruppen je Molekül) mindestens 1,8, bevorzugt mindestens 2,0 beträgt. Beispiele für geeignete mehrfunktionelle Isocyanate sind Toluylendiisocyanat, handelsüblich als eine Mischung von Massenanteilen von 80 % 2,4- und 20 % 2,6-Isomer, Isophorondiisocyanat, Hexamethylendiisocyanat, 4,4'-Diisocyanatodiphenylmethan, 4,4'-Diisocyanatodicyclohexylmethan und Tetramethylxylylendiisocyanat. Auch dimere und trimere Isocyanate (Uretdione und Isocyanurate) sowie Reaktionsprodukte von mehrfunktionellen Isocyanaten, wie Allophanate und Biurete können eingesetzt werden; von diesen sind die Verbindungen mit zwei Isocyanatgruppen bevorzugt.

Als Reaktionspartner **b12** für diese mehrfunktionellen Isocyanate werden bevorzugt Hydroxyalkylester von aliphatischen α,β-ungesättigten Carbonsäuren oder α,β-ungesättigten Dicarbonsäuren mit 2 bis 10 Kohlenstoffatomen im Hydroxyalkylrest eingesetzt; bevorzugt werden z. B. Hydroxyäthyl-, Hydroxypropyl- und Hydroxybutylester von Acrylsäure und Methacrylsäure; die Komponente **b12** kann bevorzugt auch Alkoxylierungsprodukte von (Meth)acrylsäure bis zu einem Alkoxylierungsgrad von 10 mol Alkylenoxid pro 1 mol (Meth)acrylsäure enthalten, wobei die Alkylenoxide bevorzugt aus Äthylen- und Propylenoxid sowie deren Mischungen ausgewählt sind, wie z. B. Methacrylsäuretripropylenglykolmonoester. Besonders bevorzugt werden olefinisch ungesättigte Monohydroxy-Verbindungen; werden Derivate von α,β-ungesättigten Dicarbonsäuren eingesetzt, so ist bevorzugt nur eine der Carboxylgruppen mit einem Diol zur Hydroxyalkylverbindung verestert, während die zweite Carboxylgruppe vorzugsweise mit einem einwertigen Alkohol verestert ist, bevorzugt mit Methanol, Äthanol, Propanol oder einem der isomeren Butanole.

Zur Steuerung der Verträglichkeit des Thixotropierungsmittels mit einer Reihe von (modifizierten) Alkydharzen können gegebenenfalls weitere bevorzugt ein-oder mehrfach ungesättigte Monoalkohole **b13** mit 3 bis 22 C-Atomen, wie z. B. Oleyl- und Linoleylalkohol oder deren Mischungen mit gesättigten Fettalkoholen, wie sie aus natürlichen Ressourcen entstehen, oder auch Allylalkohol und seine Alkoxylierungsprodukte oder hydroxyfunktionelle Polyallyläther, wie z. B. Trimethylolpropandiallyläther, eingesetzt werden. Der Einsatz von gesättigten Monoalkoholen ist zwar ebenfalls möglich, schwächt aber den Einbau des Thixotropierungsmittels bei der oxidativen Trocknung des Alkydharzes. Die Stoffmenge der Verbindungen **b13** kann bis zu 50 %, bevorzugt bis zu 30 %, der Stoffmenge der Verbindungen **b12** betragen.

Als Komponente b2 können aliphatische lineare, cyclische oder verzweigte Amine sowie auch araliphatische Amine eingesetzt werden, bei denen die Aminogruppen jeweils an ein aliphatisches Kohlenstoffatom gebunden sind, bevorzugt primäre Diamine, wie z. B. 4,4'-Diaminodicyclohexylmethan, Alkylendiamine und deren alkylsubstituierte Vertreter mit 2 bis 20 Kohlenstoffatomen, wie z. B. 1,2-Äthandiamin, Hexan-1,6-diamin, Neopentandiamin, 2-Butyl-2-äthyl-1,5-pentandiamin, 2-Methyl-1,6-hexandiamin, Isophorondiamin, 1,2-Propandiamin, Xylylendiamin und Norbomandiamin. Als weitere geeignete Polyamine sind Poly(-imino- und -oxy-)alkylen-Polyamine mit zwei primären Aminogruppen zu nennen, wie z. B. Diäthylentriamin, Triäthylentetramin, Aminoäthylpropanolamin, Polyäthylenimin (= Poly(iminoäthylen)diamin mit einer gewichtsmittleren molaren Masse M_{w} von ca. 500 bis ca. 2000 g/mol), Polyoxyäthylen- und Polyoxypropylendiamin mit jeweils einer gewichtsmittleren molaren Masse von bevorzugt 200 bis 800 g/mol. In bestimmten Fällen ist auch der Einsatz von primären oder sekundären Monoaminen möglich.

In den erfindungsgemäßen Zusammensetzungen ist auch Ammoniak als Komponente **b2** verwendbar. Dabei wird ein asymmetrisch substituierter Harnstoff mit sehr guter Thixotropierungswirkung erhalten, der über die Doppelbindungen in Komponente **b1** bei der oxidativen Trocknung ins Alkydharz eingebaut wird und keine Beeinträchtigung der Wetterfestigkeit ergibt. Neben gasförmigem Ammoniak können auch wäßrige Lösungen davon eingesetzt werden.

Bei der erfindungsgemäßen Synthese der Komponente **b** erfolgt vor allem die Additionsreaktion zwischen den Isocyanatgruppen der Komponente **b1** und den Aminogruppen bzw. dem Ammoniak der Komponente **b2,** während offenbar eine Reaktion zwischen den Isocyanatgruppen der Komponente **b1** und den gegenüber Isocyanaten reaktionsfähigen Hydroxyl- und Carboxylgruppen des Alkydharzes (Komponente **a**) nur in untergeordnetem Ausmaß, insbesonders bei höheren Temperaturen, stattfindet.

Setzt man eine wäßrige Ammoniaklösung ein, so ist bei reaktionsfreudigen Isocyanaten auch eine teilweise Addition von Wasser und Überführung der Isocyanatgruppen von **b1** in Aminogruppen möglich, welche mit weiterer Komponente **b1** zu substituierten Harnstoffen reagieren können.

Die Herstellung des Thixotropierungsmittels kann, wie oben beschrieben, separat oder in Gegenwart der Alkydharzkomponente der erfindungsgemäßen Zusammensetzung oder eines Teiles davon durchgeführt werden. Bevorzugt wird das erfindungsgemäße Thixotropierungsmittel im Alkydharz in situ gebildet. Dabei wird die Komponente **b2** mit dem Alkydharz **a** gemischt und bei einer Temperatur von 0 bis 140 °C die (separat hergestellte) isocyanatfunktionelle Komponente **b1** zugegeben und bis zum vollständigen Umsatz (Verbrauch) der Isocyanatgruppen reagiert.

Nach dem Abkühlen resultiert eine als Alleinbindemittel oder als Zumischharz einsetzbare, in der Regel oxidativ vernetzende, thixotrope Alkydharz-Zusammensetzung, die zur Formulierung von Überzugs-, Beschichtungs-, und Abdichtmassen verwendet werden kann.

In der Regel erfolgt die Vernetzungsreaktion des so thixotropierten Bindemittels nach gegebenenfalls weiteren Modifikationen und gegebenenfalls unter Zugabe von Reaktivverdünnern, Lösungsmitteln und weiteren Zusatzstoffen nach der Applikation unter Einwirkung von Luftsauerstoff. Es können aber auch bei Raumtemperatur reaktionsfähige Vernetzungskomponenten wie z. B. mehrfunktionelle Isocyanate zugesetzt werden. Hierbei resultieren 2-Komponenten-Polyurethan-Lacke. Die gemeinsame Verwendung der erfindungsgemäßen Bindemittel mit bei höheren Temperaturen wirksamen Vernetzern (wie Melaminharz-Vernetzern oder blockierten Isocyanaten) ist ebenfalls möglich.

Lacke, die die erfindungsgemäße Alkydharz-Zusammensetzung als Bindemittel enthalten, können als Überzugsmittel für Substrate aller Art wie Holz, Metall, Kunststoffe und Leder, und auch für mineralische Untergründe dienen. Sie lassen sich durch Spritzen, Streichen, Tauchen und Walzen aufbringen. Sie können als Klarlacke oder pigmentierte Lacke eingesetzt werden und führen zu Lackierungen mit hohem Oberflächenglanz, hoher Deckkraft, sehr gutem Verhältnis von Härte zu Elastizität, guter Wasser- und Chemikalienbeständigkeit und guter Wetterfestigkeit.

Die nachfolgenden Beispiele erläutern die Erfindung, ohne sie in ihrem Umfang zu beschränken. Alle Angaben in Prozent ("%") bedeuten Massenanteile der betreffenden Komponente (Masse der Komponente dividiert durch Masse der Mischung).

Die Säurezahl ist gemäß DIN 53 402 definiert als der Quotient derjenigen Masse ***m***_{KOH} an Kaliumhydroxid, die erforderlich ist, um eine zu untersuchende Probe zu neutralisieren, und der Masse ***m***_{B} dieser Probe (Masse des Feststoffes in der Probe bei Lösungen oder Dispersionen); ihre übliche Einheit ist "mg/g".

Die Hydroxylzahl ist gemäß DIN 53 240 definiert als der Quotient derjenigen Masse ***m***_{KOH} an Kaliumhydroxid, die genausoviel Hydroxylgruppen aufweist wie eine zu untersuchende Probe, und der Masse ***m***_{B} dieser Probe (Masse des Feststoffes in der Probe bei Lösungen oder Dispersionen); ihre übliche Einheit ist "mg/g".

In den Beispielen wurden folgende Alkydharze a eingesetzt:

### Alkydharz A

2080 g Sojaöl und 400 g Pentaerythrit wurden in Gegenwart von 0,7 g Bleioktoat bei 270 °C 2 Stunden umgeestert. Es wurde auf 210 °C gekühlt und 715 g Phthalsäureanhydrid und 135 g Xylol zugegeben. Bei 240 °C wurde eine Azeotropdestillation bis zu einer Säurezahl des Festharzes von 10 mg/g durchgeführt, anschließend bei 200 °C das Xylol abdestilliert und das Harz mit einem aromatenfreien Benzin (Siedebereich 140 bis 180 °C, Flammpunkt 38 °C) auf 60 % Festkörper-Massenanteil angelöst. Als Endwerte wurden für das Alkydharz eine Säurezahl von 7 mg/g und ein Ölgehalt von 66,5 % sowie eine dynamische Viskosität der Lösung bei 23 °C von 3220 mPa·s gefunden.

### Alkydharz B

580 g Tallölfettsäure, 150 g Pentaerythrit, 55 Benzoesäure und 100 g Isophthalsäure wurden auf 265 °C erhitzt, anschließend wurde mit 25 g Xylol eine Azeotropdestillation bis zu einer Säurezahl von 8 mg/g durchgeführt. Nach dem Anlösen mit Testbenzin auf einen Festkörper-Massenanteil von 80 % betrug die dynamische Viskosität der Lösung 870 mPa·s. Der Ölgehalt des Alkydharzes betrug 72 %.

### Alkydharz C

700 g Sonnenblumenölfettsäure und 136 g Pentaerythrit wurden ohne Lösungsmittel bei 230 °C bis zu einer Säurezahl von 8 mg/g verestert, anschließend wurden bei 200 °C 754 g Trimellithsäureanhydrid im Verlauf von einer Stunde zugegeben. Nach dem Aufheizen auf 240 °C wurde diese Temperatur gehalten, bis eine Säurezahl von 7 mg/g erreicht war. Nach dem Kühlen wurde das Harz lösungsmittelfrei abgefüllt. Die dynamische Viskosität einer 50 %igen Lösung in Xylol betrug 1870 mPa·s, der Ölgehalt war 85 %.

### Alkydharz D

560 g Safloröl und 400 g Trimethylolpropan wurden in Gegenwart von 0,1 g Bleioktoat 2 Stunden bei 270 °C umgeestert. Anschließend wurden bei 210 °C 1000 g Phthalsäureanhydrid, 460 g Trimethylolpropan und 230 g Benzoesäure zugegeben, danach wurde auf 235°C erhitzt. Mit 110 g Xylol wurde eine Azeotropdestillation durchgeführt, bis zu einer Säurezahl des Harzes von 6 mg/g und einer dynamischen Viskosität einer 50 %igen Lösung des Harzes in Xylol von 720 mPa·s. Nach Abkühlen auf 140 °C wurde mit Xylol auf einen Massenanteil des Harzes in der Lösung von 50 % verdünnt. Die Hydroxylzahl des Festharzes betrug 85 mg/g, sein Ölgehalt 28 %.

### Isocyanatfunktionelle Komponenten b1a bis b1e

Das in Tabelle 1 angeführte Düsocyanat wurde im angegebenen Verhältnis mit dem (Meth)acrylsäure-hydroxyalkylester und dem Alkohol in der Weise umgesetzt, daß das Diisocyanat im Reaktionsgefäß vorgelegt wurde und bei einer Temperatur von 30 °C die anderen Rohstoffe zugetropft wurden. Durch die Exothermie der Reaktion stieg die Temperatur dabei bis ca. 60 °C. Diese Temperatur wurde auch bis zum vollständigen Umsatz der Hydroxylgruppen gehalten.

**Tabelle 1**

| Komponente (eingesetzte Masse in g) | b1a | b1b | b1c | b1e | b1e |
|---|---|---|---|---|---|
| Toluylendiisocyanat | 174 | -- | 174 | 522 | -- |
| Tetramethylxylylendiisocyanat | -- | 244 | -- | -- | -- |
| Hexamethylendiisocyanat | -- | -- | -- | -- | 168 |
| Methacrylsäurehydroxyäthylester | 156 | -- | 104 | 195 | -- |
| Acrylsäure-2-hydroxybutylester | -- | 144 | -- | -- | -- |
| Methacrylsäuretripropylenglykolmonoester | -- | -- | -- | -- | 278 |
| ® HD-Ocenol 110/130* | -- | -- | 93 | 133 | -- |
| Isotriodecylalkohol | -- | -- | -- | -- | 40 |
| Trimethylolpropandiallyläther | -- | 43 | -- | -- | -- |
| Isocyanatwert (in %) gemäß DIN 53185 | 10,2 | 7,8 | 9,5 | 19,8 | 6,9 |

| | | | | | |
|---|---|---|---|---|---|
| *) Oleyl-Linoleyalkohol, Jodzahl (n. DIN 53241) 110 bis 130 g/(100 g), Fa. Henkel KgaA | | | | | |

**Tabelle 2**

| Beispiel | 1 | 2 | 3 | 4 | 5 | 6 |
|---|---|---|---|---|---|---|
| Alkydharz | A | B | C | D | A | C |
| Masse des Harzes bzw.der Harzlösung in g (Lieferform) | 158 | 119 | 95 | 186 | 155 | 95 |
| Massengehalt Festharz in der Lieferform | 60 % | 80 % | 100 % | 50 % | 60 % | 100 % |

| **Komponente b2** (Massen in g) | | | | | | |
|---|---|---|---|---|---|---|
| Ammoniak conc. | 0,8 | | | | | |
| 1,6 Hexandiamin | | 0,5 | 0,6 | | | |
| m-Xylylendiamin | | | | 0,7 | | 1,2 |
| Polyoxypropylendiamin (M_{w} =400 g/mol) | | | | | 3,4 | |

| **Komponente b1** | | | | | | |
|---|---|---|---|---|---|---|
| Variante (Tabelle 1) | b1a | b1b | b1c | b1e | b1d | b1d |
| Masse in g | 4,8 | 4,5 | 4,4 | 6,3 | 3,6 | 3,8 |
| Masse des Festharzes in der Alkydharz-Zusammensetzung in g | 100 | 100 | 100 | 100 | 100 | 100 |

### Thixotropierung der Alkydharze

### Beispiele 1 bis 6

Die Thixotropierung der Bindemittel wurde in einer "in situ-Reaktion" durchgeführt. Dabei wurde die Komponente **b2** bei 40 °C mit dem Alkydharz vollständig gemischt und die Isocyanatkomponente **b1** bei dieser Temperatur in ca. 15 Minuten zugegeben. Nach guter Durchmischung wurde der Ansatz 2 Stunden lang auf 40 °C gehalten und zur Kontrolle der Isocyanatwert bestimmt. Bei allen Beispielen lag der Massenanteil an Isocyanatgruppen unter 0,03 % (Erfassungsgrenze), bezogen auf die Masse des Festharzes. Die eingesetzten Massen der betreffenden Komponenten sind in Tabelle 2 angegeben.

### Herstellung einer thixotropen Lasur

125 g thixotropes Alkydharz aus Beispiel 2 (80 %ige Lösung in Testbenzin) wurden mit weiterem Testbenzin und 2 g Propylenglykol auf 70 % verdünnt, zusätzlich wurden 1 g Kobalt-Zirkontrockner (Kobalt- und Zirkon-Oktoat gelöst in Testbenzin; Metallgehalt: 6 % Kobalt und 9 % Zirkon) und 1 g Methyläthylketoxim eingerührt. Anschließend wurde durch weitere Zugabe von Testbenzin eine dynamische Viskosität der Lösung bei 23 °C und einer Scherrate von 2500 s⁻¹ von 120 mPa·s eingestellt. Nach 24 Stunden wurde die tropffreie Lasur auf Holz appliziert und ergab eine Klebfreizeit von 6 Stunden und eine Ablaufgrenze von über 300 µm.

Die Klebfreizeit wird bestimmt, indem der nicht pigmentierte Lack auf eine Glasplatte in einer Schichtdicke von 76 µm aufgetragen wird. Nach festgelegten Zeitintervallen bei Aufbewahrung bei Raumtemperatur (20 °C, 50 % rel. Luftfeuchtigkeit) wird die Klebrigkeit durch leichtes Auflegen der Fingerkuppe bestimmt.

Die Ablaufgrenze wird bestimmt, indem der auf Verarbeitungsviskosität (bevorzugt ca. 500 bis 600 mPa·s) eingestellte Lack in einen Verlauf- und Ablauf-Prüfrakel (Erichsen, Modell 419) auf das Substrat gegossen wird. Beim Ziehen des Rakels mit gleichmäßiger Geschwindigkeit über das Substrat bilden sich 10 in einem Abstand von 1,6 mm nebeneinanderliegende Streifen aus mit einer Breite von je 6,4 mm, die Schichtdicke entspricht den Spaltbreiten von 75, 100, 125 etc. bis 300 µm.Das Substrat wird unmittelbar nach Auftragen der Lackstreifen senkrecht so aufgestellt, daß der dünnste Streifen nach oben zu liegen kommt, und alle Streifen waagrecht ausgerichtet sind. Abhängig von den Ablauf-Eigenschaften des Lackes verlaufen die Streifen zu einer zusammenhängenden Schicht oder bleiben getrennt.

### Herstellung eines Weißlackes

100 g der thixotropen Alkydharz-Zusammensetzung aus Beispiel 3 (100 %ig) wurden mit 22 g aromatenfreiem Benzin (Flammpunkt 60 °C) verdünnt und mit 100 g Titandioxid angerieben. Anschließend wurden 11,3 g aromatenfreies Benzin, 2 g Propylenglykol und 1 g Kobalt-Zirkontrockner (6 % Kobalt, 9 % Zirkon), 0,5g Methyläthylketoxim und 1 g Silikonverlaufmittel zugegeben.

Der Festkörper-Massenanteil des Lackes war 85 %, die dynamische Viskosität bei 23 °C und einer Scherrate von 2500 s⁻¹ betrug 260 mPa·s, die Klebfreizeit 4 Stunden und die Ablaufgrenze über 300 µ.

## Patentansprüche

1. Thixotrope Zusammensetzungen von lufttrocknenden Alkydharzen, enthaltend Massenanteile von
- 75 bis 98 % Alkydharzen oder modifizierten Alkydharzen **a** mit einem Ölgehalt von 20 bis 90 % und
- 2 bis 25 % eines Thixotropierungsmittels **b,** erhältlich durch die Reaktion eines
- isocyanatfunktionellen Umsetzungsprodukts **b1** eines mehrfunktionellen Isocyanates **b11** mit einer olefinisch ungesättigten hydroxyfunktionellen Verbindung **b12** ausgewählt aus Hydroxylalkylestern von aliphatischen α,β-ungesättigten Carbonsäuren oder α,β-ungesättigten Dicarbonsäuren mit 2 bis 10 Kohlenstoffatomen im Hydroxyalkylrest und Alkoxylierungsprodukten von (Meth)acrylsäure bis zu einem Alkoxylierungsgrad von 10 mol Alkylenoxid pro 1 mol (Meth)acrylsäure,
mit
- einer aminischen Komponente **b2,** ausgewählt aus einem (Poly)amin und Ammoniak,
wobei bei der Herstellung von **b1** das Verhältnis der Zahl der Isocyanatgruppen in der Komponente **b11** zur Zahl der Hydroxylgruppen in der Komponente **b12** 1 : 0,3 bis 1 : 0,8 ist und die verbleibenden Isocyanatgruppen in **b1** vollständig durch die Reaktion mit der aminischen Komponente **b2** verbraucht werden, und wobei die Summe der Massenanteile von a und b stets 100 % ergibt.

2. Thixotrope Zusammensetzungen von lufttrocknenden Alkydharzen nach Anspruch 1, **dadurch gekennzeichnet, daß** zusätzlich zur Komponente **b12** bei der Umsetzung mit dem Polyisocyanat **b11** ein Monoalkohol **b13** eingesetzt wird mit 3 bis 22 C-Atomen, ausgewählt aus aliphatischen linearen, verzweigten oder cyclischen Alkoholen sowie araliphatischen Alkoholen, bei denen die Hydroxylgruppe an ein aliphatisches Kohlenstoffatom gebunden ist.

3. Thixotrope Zusammensetzungen von lufttrocknenden Alkydharzen-nach Anspruch 1, **dadurch gekennzeichnet, daß** die Komponente **b13** ungesättigte Monoalkohole enthält.

4. Thixotrope Zusammensetzungen von lufttrocknenden Alkydharzen nach Anspruch 1, **dadurch gekennzeichnet, daß** als mehrfunktionelle Isocyanate **b11** lineare, verzweigte oder cyclische aliphatische oder aromatische Verbindungen mit zwei oder mehreren Isocyanatgruppen im Molekül eingesetzt werden.

5. Thixotrope Zusammensetzungen von lufttrocknenden Alkydharzen nach Anspruch 1, **dadurch gekennzeichnet, daß** als Komponente **b11** ein Gemisch von Isocyanaten eingesetzt wird, mit einer mittleren Isocyanat-Funktionalität von mindestens 1,8.

6. Thixotrope Zusammensetzungen von lufttrocknenden Alkydharzen nach Anspruch 1, **dadurch gekennzeichnet, daß** als Komponente **b12** Hydroxyalkyl(meth)acrylate mit 2 bis 4 Kohlenstoffatomen im Alkylrest eingesetzt werden.

7. Thixotrope Zusammensetzungen von lufttrocknenden Alkydharzen nach Anspruch 1, **dadurch gekennzeichnet, daß** die Komponente **b12** Alkoxylierungsprodukte von Acrylund/oder Methacrylsäure mit bis zu 10 mol Alkylenoxid pro 1 mol der (Meth)Acrylsäure enthält, wobei die Alkylenoxide aus Äthylen- und Propylenoxid sowie deren Mischungen ausgewählt sind.

8. Thixotrope Zusammensetzungen von lufttrocknenden Alkydharzen nach Anspruch 1, **dadurch gekennzeichnet, daß** die Komponente **b2** ausgewählt ist aus primären Diaminen mit 4 bis 10 Kohlenstoffatomen und Polyoxyalkylen-Polyaminen mit einer gewichtsmittleren molaren Masse M_{w} von 200 bis 800 g/mol.

9. Verfahren zur Herstellung von thixotropen Zusammensetzungen lufttrocknender Alkydharze durch
- Umsetzung eines mehrfunktionellen Isocyanats **b11** mit einem olefinisch ungesättigten Hydroxyester **b12** ausgewählt aus Hydroxylalkylestern von aliphatischen α,β-ungesättigten Carbonsäuren oder α,β-ungesättigten Dicarbonsäuren mit 2 bis 10 Kohlenstoffatomen im Hydroxyalkylrest und Alkoxylierungsprodukten von (Meth)acrylsäure bis zu einem Alkoxylierungsgrad von 10 mol Alkylenoxid pro 1 mol (Meth)acrylsäure zu einem isocyanatfunktionellen Umsetzungsprodukt **b1**, wobei das Verhältnis der Zahl der Isocyanatgruppen in der Komponente **b11** zur Zahl der Hydroxylgruppen in der Komponente **b12** 1 : 0,3 bis 1 : 0,8 ist,
- anschließende Umsetzung von **b1** mit einer aminischen Komponente **b2,** ausgewählt aus einem (Poly)amin und Ammoniak, wobei die verbleibenden Isocyanatgruppen in **b1** vollständig durch die Reaktion mit der aminischen Komponente **b2** verbraucht werden, zu einer Verbindung **b**, und
- Mischen eines Massenanteiles von 75 bis 98 % eines Alkydharzes **a** und eines Massenanteiles von 2 bis 25 % der Verbindung **b** zu einer thixotropen Alkydharz-Zusammensetzung, wobei die Summe der Massenanteile von **a** und **b** stets 100 % ergibt.

10. Verfahren nach Anspruch 9, **dadurch gekennzeichnet, daß** die Umsetzung von den isocyanatfunktionellen Verbindungen **b1** und den aminischen Verbindungen **b2** in Gegenwart eines Anteiles von mindestens 25 % der Masse des Alkydharzes a erfolgt

11. Verwendung der thixotropen Zusammensetzungen von lufttrocknenden Alkydharzen nach Anspruch 1 als Bindemittel in Lacken.

12. Verwendung der thixotropen Zusammensetzungen von lufttrocknenden Alkydharzen nach Anspruch 1 als Bindemittel in Einkomponenten-Lacken unter Zusatz von Melaminharzen oder blockierten Isocyanaten als Vernetzer.

13. Verwendung der thixotropen Zusammensetzungen von lufttrocknenden Alkydharzen nach Anspruch 1 als Bindemittel in Zweikomponenten-Lacken unter Zusatz von mehrfunktionellen Isocyanaten als Vernetzer.

## Claims

1. Thixotropic compositions of air-drying alkyd resins comprising mass fractions of
- from 75 to 98% of alkyd resins or modified alkyd resins **a** having an oil content of from 20 to 90% and
- from 2 to 25% of a thixotropic agent **b** obtainable by reacting
- an isocyanate-functional reaction product **b1** of a polyfunctional isocyanate **b11** with an olefinically unsaturated hydroxy-functional compound **b12** selected from hydroxyalkyl esters of aliphatic α,β-unsaturated carboxylic acids or α,β-unsaturated dicarboxylic acids having 2 to 10 carbon atoms in the hydroxyalkyl radical and alkoxylation products of (meth)acrylic acid up to a degree of alkoxylation of 10 mol of alkylene oxide per mole of (meth)acrylic acid
with
- an amine-type component **b2** selected from a (poly)amine and ammonia,
the ratio of the number of the isocyanate groups in component **b11** to the number of the hydroxyl groups in component **b12** during the preparation of **b1** being from 1 : 0.3 to 1 : 0.8 and all of the remaining isocyanate groups in **b1** being consumed by the reaction with the amine-type component **b2**, and the sum of the mass fractions of **a** and **b** always being 100%.

2. Thixotropic compositions of air-drying alkyd resins as claimed in claim 1, **characterized in that** in addition to component **b12** during the reaction with the polyisocyanate **b11** a monoalcohol **b13** is used having from 3 to 22 carbon atoms, selected from aliphatic linear, branched or cyclic alcohols and also araliphatic alcohols in which the hydroxyl group is attached to an aliphatic carbon atom.

3. Thixotropic compositions of air-drying alkyd resins as claimed in claim 1, **characterized in that** component **b13** comprises unsaturated monoalcohols.

4. Thixotropic compositions of air-drying alkyd resins as claimed in claim 1, **characterized in that** linear, branched or cyclic aliphatic or aromatic compounds having two or more isocyanate groups in the molecule are used as polyfunctional isocyanates **b11.**

5. Thixotropic compositions of air-drying alkyd resins as claimed in claim 1, **characterized in that** a mixture of isocyanates having an average isocyanate functionality of at least 1.8 is used as component **b11.**

6. Thixotropic compositions of air-drying alkyd resins as claimed in claim 1, **characterized in that** hydroxyalkyl (meth)acrylates having 2 to 4 carbon atoms in the alkyl radical are used as component **b12.**

7. Thixotropic compositions of air-drying alkyd resins as claimed in claim 1, **characterized in that** component **b12** comprises alkoxylation products of acrylic and/or methacrylic acid with up to 10 mol of alkylene oxide per mole of (meth)acrylic acid, the alkylene oxides being selected from ethylene oxide and propylene oxide and also mixtures thereof.

8. Thixotropic compositions of air-drying alkyd resins as claimed in claim 1, **characterized in that** component **b2** is selected from primary diamines having 4 to 10 carbon atoms and polyoxyalkylene-polyamines having a weight-average molar mass M_{w} of from 200 to 800 g/mol.

9. A process for preparing thixotropic compositions of air-drying alkyd resins by
- reacting a polyfunctional isocyanate **b11** with an olefinically unsaturated hydroxy ester **b12** selected from hydroxyalkyl esters of aliphatic α,β-unsaturated carboxylic acids or α,β-unsaturated dicarboxylic acids having 2 to 10 carbon atoms in the hydroxyalkyl radical and alkoxylation products of (meth)acrylic acid up to a degree of alkoxylation of 10 mol of alkylene oxide per mole of (meth)acrylic acid to give an isocyanate-functional reaction product **b1,** the ratio of the number of the isocyanate groups in component **b11** to the number of the hydroxyl groups in component **b12** being from 1 : 0.3 to 1 : 0.8,
- subsequently reacting **b1** with an amine-type component **b2** selected from a (poly)amine and ammonia, all of the remaining isocyanate groups in **b1** being consumed by the reaction with the amine-type component **b2,** to give a compound **b,** and
- mixing a mass fraction of from 75 to 98% of an alkyd resin **a** and a mass fraction of from 2 to 25% of the compound **b** to give a thixotropic alkyd resin composition, the sum of the mass fractions of **a** and **b** always being 100%.

10. The process as claimed in claim **9, characterized in that** the reaction of the isocyanate-functional compounds **b1** and the amine-type compounds **b2** takes place in the presence of a fraction of at least 25% of the mass of the alkyd resin **a**.

11. Use of the thixotropic compositions of air-drying alkyd resins as claimed in claim 1 as binders in coating materials.

12. Use of the thixotropic compositions of air-drying alkyd resins as claimed in claim 1 as binders in one-component coating materials with the addition of melamine resins or blocked isocyanates as crosslinkers.

13. Use of the thixotropic compositions of air-drying alkyd resins as claimed in claim 1 as binders in two-component coating materials with the addition of polyfunctional isocyanates as crosslinkers.

## Revendications

1. Compositions thixotropes de résines alkyde séchant à l'air, contenant des proportions en masse de
- 75 à 98 % de résines alkyde ou de résines alkyde modifiées **a** avec une teneur en huile de 20 à 90 % et
- 2 à 25 % d'un agent thixotrope **b,** pouvant être obtenu par la réaction d'un produit de réaction à fonctionnalité isocyanate **b1** d'un isocyanate polyfonctionnel **b11** avec un composé **b12** à fonctionnalité hydroxy oléfiniquement insaturé choisi parmi les esters hydroxyalkyliques d'acides carboxyliques aliphatiques α,β-insaturés ou d'acides dicarboxyliques α,β-insaturés avec de 2 à 10 atomes de carbone dans le groupe hydroxyalkyle et de produits d'alcoxylation d'acide (méth)acrylique jusqu'à un degré d'alcoxylation de 10 mol d'oxyde d'alkylène pour 1 mol d'acide (méth)acrylique,
avec
un composant aminé **b2**, choisi parmi une (poly)amine et l'ammoniac,
dans lesquelles lors de la préparation de **b1** le rapport de l'indice des groupes isocyanate dans le composant **b11** par rapport à l'indice des groupes hydroxyle dans le composant **b12** est de 1 : 0,3 à 1 : 0,8 et les groupes isocyanate restants dans **b1** sont consommés complètement par la réaction avec le composant aminé **b2,** et dans lesquelles la somme des proportions en masse de **a** et de **b** est toujours égale à 100 %.

2. Compositions thixotropes de résines alkyde séchant à l'air selon la revendication 1, **caractérisées en ce qu'**on utilise en plus du composant **b12** dans la réaction avec le polyisocyanate **b11** un monoalcool **b13** avec de 3 à 22 atomes de carbone, choisi parmi les alcools aliphatiques linéaires, ramifiés ou cycliques ainsi que les alcools araliphatiques, dans lesquels le groupe hydroxyle est lié à un atome de carbone aliphatique.

3. Compositions thixotropes de résines alkyde séchant à l'air selon la revendication 1, **caractérisées en ce que** le composant **b13** contient des monoalcools insaturés.

4. Compositions thixotropes de résines alkyde séchant à l'air selon la revendication 1, **caractérisées en ce qu'**on utilise comme isocyanates polyfonctionnels **b11** des composés linéaires, ramifiés ou cycliques, aliphatiques ou aromatiques avec deux groupes isocyanate ou plus dans la molécule.

5. Compositions thixotropes de résines alkyde séchant à l'air selon la revendication 1, **caractérisées en ce qu'**on utilise comme composant **b11** un mélange d'isocyanates, avec une fonctionnalité isocyanate moyenne d'au moins 1,8.

6. Compositions thixotropes de résines alkyde séchant à l'air selon la revendication 1, **caractérisées en ce qu'**on utilise comme composant **b12** des (méth)acrylates d'hydroxyalkyle avec de 2 à 4 atomes de carbone dans le groupe alkyle.

7. Compositions thixotropes de résines alkyde séchant à l'air selon la revendication 1, **caractérisées en ce que** le composant **b12** contient des produits d'alcoxylation d'acide acrylique et/ou méthacrylique avec jusqu'à 10 mol d'oxyde d'alkylène pour 1 mol de l'acide (méth)acrylique,
dans lesquelles les oxydes d'alkylène sont choisis parmi l'oxyde d'éthylène et de propylène ainsi que leurs mélanges.

8. Compositions thixotropes de résines alkyde séchant à l'air selon la revendication 1, **caractérisées en ce que** le composant **b2** est choisi parmi les diamines primaires avec de 4 à 10 atomes de carbone et les polyoxyalkylène-polyamines avec une masse molaire moyenne en masse M_{w} de 200 à 800 g/mol.

9. Procédé pour la préparation de compositions thixotropes de résines alkyde séchant à l'air par
- réaction d'un isocyanate polyfonctionnel **b11** avec un hydroxyester **B12** oléfiniquement insaturé choisi parmi les esters hydroxyalkyliques d'acides carboxyliques aliphatiques α,β-insaturés ou d'acides dicarboxyliques α,β-insaturés avec de 2 à 10 atomes de carbone dans le groupe hydroxyalkyle et de produits d'alcoxylation d'acide (méth)acrylique jusqu'à un degré d'alcoxylation de 10 mol d'oxyde d'alkylène pour 1 mol d'acide (méth)acrylique pour obtenir un. produit de réaction **b1** à fonctionnalité isocyanate, dans lequel le rapport de l'indice des groupes isocyanate dans le composant **b11** sur l'indice des groupes hydroxyle dans le composant **b12** est de 1 : 0,3 à 1 : 0,8,
- ensuite réaction de **b1** avec un composant aminé **b2,** choisi parmi une (poly) amine et l'ammoniac, dans lequel les groupes isocyanate restants dans **b1** sont consommés complètement par la réaction avec le composant aminé **b2,** pour obtenir un composé **b,** et
- mélange d'une proportion en masse de 75 à 98 % d'une résine alkyde **a** et d'une proportion en masse de 2 à 25 % du composé **b** pour obtenir une composition thixotrope de résine alkyde, dans laquelle la somme des proportions en masse de **a** et de **b** est toujours égale à 100 %.

10. Procédé selon la revendication 9, **caractérisé en ce que** la réaction des composés à fonctionnalité isocyanate **b1** et des composés aminés **b2** est réalisée en présence d'une proportion d'au moins 25 % de la masse de la résine alkyde **a**.

11. Utilisation des compositions thixotropes de résines alkyde séchant à l'air selon la revendication 1 comme liant dans des peintures.

12. Utilisation des compositions thixotropes de résines alkyde séchant à l'air selon la revendication 1 comme liant dans des peintures à un composant en utilisant comme agent réticulant des résines mélamine ou des isocyanates bloqués.

13. Utilisation des compositions thixotropes de résines alkyde séchant à l'air selon la revendication 1 comme liant dans des peintures à deux composants en utilisant comme agent réticulant des isocyanates polyfonctionnels.
